(19) Europäisches Patentamt
European Patent Office
Office européen des brevets

(11) **EP 4 742 527 A1**

(12) **EUROPEAN PATENT APPLICATION**

(43) Date of publication:
**13.05.2026 Bulletin 2026/20**

(21) Application number: **24306897.0**

(22) Date of filing: **12.11.2024**

(51) International Patent Classification (IPC):
**H02S 50/00** (2014.01)    **H02S 50/10** (2014.01)

(52) Cooperative Patent Classification (CPC):
**H02S 50/10; H02S 50/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TotalEnergies OneTech
92400 Courbevoie (FR)**

(72) Inventors:
• **EL ZAHER, Adham
92078 PARIS LA DEFENSE CEDEX (FR)**
• **GUILLEMOT, Loïc
92078 PARIS LA DEFENSE CEDEX (FR)**

(74) Representative: **Lavoix
2, place d'Estienne d'Orves
75441 Paris Cedex 09 (FR)**

(54) **METHOD OF DETERMINING A CORRECTED IRRADIANCE OF A PHOTOVOLTAIC SYSTEM**

(57)     The method for determining a corrected irradiance comprises the steps of :
- obtaining a dataset of operating points of photovoltaic cells, each operating point being defined by parameters including the photovoltaic cell, the day, the power output of the photovoltaic cell, the temperature of the photovoltaic cell and the irradiance of the photovoltaic cell, the operating points of the dataset being taken over a period of time ;
- determining a plurality of data subsets in the dataset, each data subset including the operating points having a day included in one of a plurality of sub-periods of the period and an irradiance included in one of a plurality of irradiance sub-ranges;
- performing regression analysis on each data subset for determining regression parameters for each data subset; and
- calculating the corrected irradiance as a function of the regression parameters of the data subsets.

FIG.1

**Description**

The invention relates to the production of electricity using solar photovoltaic (PV) systems.

The rapid growth of production of electricity using PV systems has transformed the energy landscape, with significant implications for the efficiency, reliability, and performance of PV systems worldwide.

As the global share of PV systems in electricity production continues to rise, ensuring the optimal operation of these PV systems over extended periods becomes increasingly important.

PV cells of a PV system are subject to a natural decline in production capacity over time. One critical challenge for operators is estimating the annual degradation rates of PV cells of a PV system.

While PV module manufacturers provide nominal degradation rates, these values often serve as little more than a baseline, with actual performance losses frequently exceeding expectations.

The power output of PV systems is influenced by two primary meteorological factors: the temperature of the PV cells (Tcell) and the irradiance on the plane of the PV cells (Gpoa).

Normalizing power by these values enables the calculation of the Performance Ratio Temperature-Corrected (PRTC), which facilitates the evaluation of long-term performance loss rates (PLR).

However, even after accounting for temperature and irradiance, many PV systems exhibit residual seasonal variations in PRTC, compromising the accuracy of PLR assessments.

Current methods, such as a year-on-year approach or seasonal trend decomposition techniques, often fail to identify the underlying causes of these seasonality effects and assume a constant degradation pattern over extended periods.

One of the aims of the invention it to propose a method which allows accurately evaluating the PLR of PV systems over extended periods, addressing the challenges posed by seasonal variations in PRTC values.

To this end, the invention proposes a method for determining a corrected irradiance of a photovoltaic system over a period, the photovoltaic system comprising photovoltaic cells, the method comprising the steps of:

- obtaining a dataset of operating points of the photovoltaic cells, each operating point being defined by parameters including the photovoltaic cell, the day, the power output of the photovoltaic cell, the temperature of the photovoltaic cell and the irradiance of the photovoltaic cell, the operating points of the dataset being taken over a period of time ;
- determining a plurality of data subsets in the dataset, each data subset including the operating points having a day included in one of a plurality of sub-periods of the period and an irradiance included in one of a plurality of irradiance sub-ranges;

- performing regression analysis on each data subset for determining regression parameters for each data subset;
- optionally, validating the dataset as a function of the regression parameters of the data subsets;
- calculating the corrected irradiance as a function of the regression parameters of the data subsets;
- optionally calculating a performance loss rate of the photovoltaic system as a function of the corrected irradiance.

The approach provides improved accuracy and reliability compared to existing methods, enabling more informed decision-making for PV system operators and developers.

In some examples, the method comprises one or more of the following optional features, taken individually or in any technically feasible combination:

- validation of the dataset comprises determining a comparison parameter as a function of the regression parameters and comparing the comparison parameter to a nominal parameter of the photovoltaic cells;
- the comparison parameter is a mean value determined as the mean value of a Gaussian fit of a distribution of comparison parameters of the data subsets:
- the corrected irradiance is calculated as a function of the initial irradiance based on a regression analysis between initial irradiance and the regression parameters of the data subsets;
- the regression analysis comprises, for each data subset, determining a power variation and power at 0°C by performing a linear regression according to the following formula :

$$P = a_i T_{cell} + b_i$$

in which P is the power of the photovoltaic cell, *Tcell* is the temperature of the photovoltaic cell, $a_i$ is the power variation (W/°C) of the ith data subset, $b_i$ is the power at 0°C (W) of the ith data subset;

- the validation test comprises, for each data subset, determining a power thermal coefficient representing the variation of the power output a photovoltaic cell as a function of the temperature of the photovoltaic cell:

$$\gamma_i = \frac{a_i}{b_i}$$

in which $a_i$ and $b_i$ are the regression parameters (power variation and power at 0°C) determined for the ith data subset and $\gamma_i$ (%/°C) is the power thermal coefficient of the ith data subset;

- the validation test comprises comparing a mean power thermal coefficient of the data subsets to a nominal power thermal coefficient of the photovoltaic cells.

- the mean value of the power thermal coefficient of the data subsets is determined as the mean value of a Gaussian fit of the distribution of the power thermal coefficient of the data subsets.
- the dataset is validated if the absolute value of a difference between the mean value of the power thermal coefficients of the data subsets and a nominal power thermal coefficient of the photovoltaic cells is below a validation threshold.
- the validation threshold is 2.10-3 °C-1.
- the determination of the corrected irradiance comprises determining an overall power variation coefficient by performing a linear regression of the power variations of the data subsets as a function of the irradiance according to the following formula:

$$a = \alpha G_{poa}$$

wherein $a$ is the power variation, $G_{poa}$ is the irradiance and $\alpha$ is an overall power variation coefficient;
- the determination of the corrected irradiance comprises, for each data subset, determining a corrected power at 0°C (W) by performing a linear regression analysis on the power, the temperature, the irradiance and the powers at 0°C of the data subsets according to the following formula:

$$P = \alpha G_{poa} T_{cell} + B_i$$

in which P is the power of the operation points of the $i^{th}$ data subset, $Tcell$ is the temperature of the operation points of the $i^{th}$ data subset, $G_{poa}$ is the irradiance of the $i^{th}$ data subset, $\alpha$ is the overall power variation coefficient and $B_i$ is the corrected power at 0°C (W) of the $i^{th}$ data subset;
- the determination of the corrected irradiance comprises determining an overall coefficient of power at 0°C by performing a linear regression of the corrected power at 0°C of the data subsets as a function of the irradiance according to the following formula:

$$b = \delta G_{poa}$$

wherein $b$ is the corrected power at 0°C, $G_{poa}$ is the irradiance of the data subsets and $\delta$ is an overall coefficient of power at 0°C.
- the corrected irradiance is calculated for each operation point according the following formula:

$$G_{poa}(new) = G_{poa} + \frac{B_i}{\delta}$$

wherein Gpoa(new) is the corrected irradiance, $G_{poa}$

if the initial irradiance, $B_i$ is corrected power at 0°C of the $i^{th}$ data subset of the operation point and $\delta$ is the overall coefficient of effective power at 0°C;
- the method comprises quantifying the seasonality of the dataset;
- quantifying the seasonality of the dataset comprises fitting the power output to a predetermined function having an amplitude and determining said amplitude;
- if the amplitude exceeds a predetermined threshold, the dataset is labeled as having seasonal characteristics and the subsequent steps are performed;
- the predetermined function is:

$$PR = A sin(\frac{2\Pi}{T}t + \Phi)$$

with A the amplitude, T the period of the sinusoid, and t the time, e.g. expressed as a number of days;
- the period extends over several months, in particular at least twenty-four months.
- each sub-period is a month.

The invention also relates to a software comprising software instructions configured to be stored in a memory of a computer and to implement the method of determining a corrected irradiance as defined above when executed by a processor of the computer.

The invention also relates to an electronic device configured for implementing a method of determining a corrected irradiance as defined above, the electronic device comprising:

- a reception module configured for obtaining a dataset of operating points of photovoltaic cells, each operating point being defined by parameters including the photovoltaic cell, the day, the power output of the photovoltaic cell, the temperature of the photovoltaic cell and the irradiance of the photovoltaic cell, the operating points of the dataset being taken over a period of time ;
- a configuration module configured for determining a plurality of data subsets in the dataset, each data subset including the operating points having a day included in one of a plurality of sub-periods of the period and an irradiance included in one of a plurality of irradiance sub-ranges;
- a regression module configured for performing a regression analysis on each data subset for determining regression parameters for each data subset;
- optionally, a validation module configured for validating the dataset as a function of the regression parameters of the data subsets;
- a calculation module configured for calculating a corrected irradiance as a function of the regression parameters of the data subsets;
- optionally, a determination module configured for determining the performance loss rate of the photovoltaic system as a function of the corrected irradiance.

The invention and its advantages will be better understood upon reading the following description, which is given solely as a non-limiting example and with reference to the appended drawings, in which:

- Figure 1 is schematic view of a photovoltaic system configured for converting solar radiation into electrical energy and an associated electronic device for determining a corrected irradiance and a performance loss rate;
- Figure 2 is a bloc diagram illustrating steps of a method for determining a corrected irradiance of the photovoltaic system;
- Figure 3 is a graph showing a plot of power thermal coefficient occurrences and a Gaussian fit;
- Figure 4 are graphs showing values of power variation and power at 0°C of data subsets as a function of irradiance.

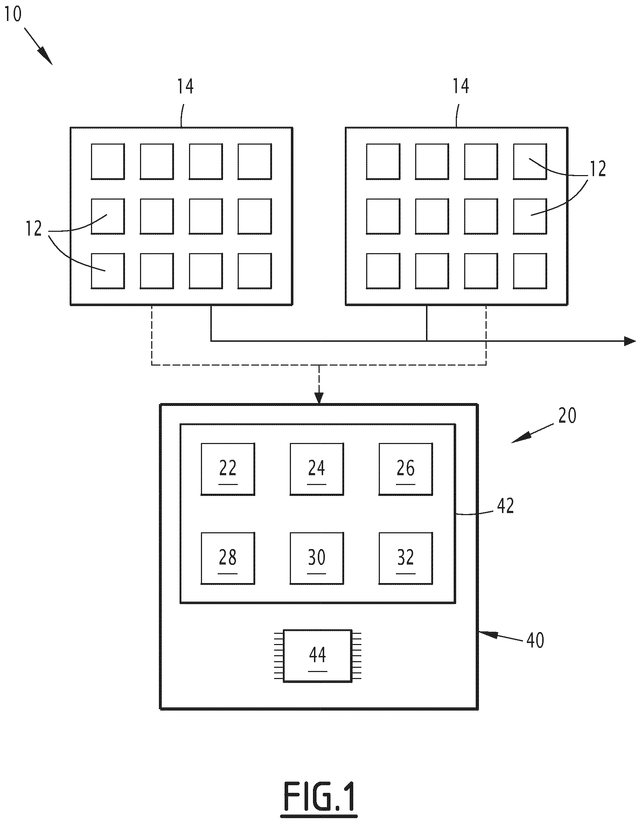

The photovoltaic system 10 illustrated on Figure 1 comprises photovoltaic cells 12. The photovoltaic cells 12 are provided for example on photovoltaic panels 14, each photovoltaic panel 14 comprising an array of photovoltaic cells 12.

The photovoltaic system 10 is configured for generating electrical energy by converting solar radiations into electrical energy. Each photovoltaic cells 12 is adapted for converting solar radiations R into electrical energy.

The performances of a photovoltaic cell 12 depend notably on the temperature Tcell of the photovoltaic cell 12 and the irradiance Gpoa.

The irradiance Gpoa is the flux of radiant energy per unit area normal to the direction of flow of radiant energy through the photovoltaic cell 12.

The performances of a photovoltaic cell 12 vary naturally over time. More specifically, the performances of a photovoltaic cell 12 tend to decrease over time.

It is useful to determine long-term performance loss rates (PLR) of the photovoltaic system 10 accurately with taking into account the seasonality.

In practice, the temperature Tcell and the irradiance Gpoa of photovoltaic cells 12 of a photovoltaic system 10 installed in a particular location vary from month to month.

In particular, the temperature Tcell and the irradiance Gpoa of each photovoltaic cell 12 of a photovoltaic system 10 generally present a seasonality.

As illustrated on Figure 1, an electronic device 20 is configured for determining a corrected irradiance and, optionally, the performance loss rate of the photovoltaic system 10.

The electronic device 20 is implemented for example on the geographical site of the photovoltaic system 10 or remotely from this geographical site of the photovoltaic system 10 (i.e. in another geographical site distinct from that of the photovoltaic system 10.

The electronic device 20 comprises a reception module 22 configured for receiving a dataset containing measurements made on the photovoltaic cells 12 of photovoltaic system 10.

The dataset comprises for each photovoltaic cell 12 a plurality of operating points taken at different instants during a measurement period.

Each operating point of each photovoltaic cell 12 is characterized by a set parameters including the day of the year, the temperature of the photovoltaic cell 12, the irradiance of the photovoltaic cell 12 and the power output (or "power") of the photovoltaic cell 12.

The electronic device 20 comprises a configuration module 24 configured for determining data subsets from the data, each data subset including operating points having a day in a same sub-period and an irradiance in a same sub-range.

Each data subset gathers the operating points of a same sub-period and a same irradiance sub-range. The sub-period are preferably different with no overlap. The irradiance sub-ranges are preferably different with no overlap.

The electronic device 20 comprises a regression module 26 configured for performing a regression analysis on each data subset for determining regression parameters for each data subset.

The electronic device 20 comprises a validation module 28 configured for validating the dataset as a function of the regression parameters of the data subsets.

The electronic device 20 comprises a correction module 30 configured for calculating a corrected irradiance as a function of the regression parameters of the data subsets.

The electronic device 20 optionally comprises a determination module 32 configured for determining the performance loss rate of the photovoltaic system as a function of the corrected irradiance.

The electronic device 20 optionally comprises a verification module 34 configured for determining whether the photovoltaic system 10 is subject to seasonality based on the dataset.

When provided, the verification module 34 is configured for verifying the seasonality of the dataset before operating the validation module 28 and the correction module 30.

The electronic device 20 comprises for example a data processing unit 40 including a memory 42 and a processor 44.

The reception module 22, the configuration module 24, the regression module 26, the validation module 28, the correction module 30, the determination module 32 and optionally the verification module 34 are each from or a software or a software component that can be executed by the processor 44.

In such case, the memory 42 is adapted to store a reception software, a regression software, a validation software, a correction software, a determination software and optionally a verification software, the processor 44 being adapted to execute the reception software, the regression software, the validation software, the correction software, the determination software and optionally the verification software.

When the electronic device 20 is formed of a software, said software is adapted to be store on a non-volatile computer-readable support, such as an optical disc, a magnetooptical disc, a ROM, a RAM, any non-volatile memory such as EPROM, EEPROM, FLASH, NVRAM), a magnetic card or an optic card.

Alternatively, the reception module 22, the configuration module 24, the regression module 26, the validation module 28, the correction module 30, the determination module 32 and optionally the verification module 34 are each formed of a programmable logic component such as a Field Programmable Gate Array (FPGA) or an integrated circuit, such as an Application Specific Integrated Circuit (ASIC).

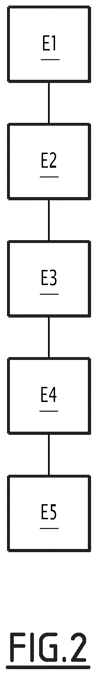

As illustrated on Figure 2, the electronic device 20 is configured for implementing a method of determining a corrected irradiance of the photovoltaic system 10. The method of determining a corrected irradiance comprises the steps of:

- obtaining a dataset of operating points of the photovoltaic cells 12 of the photovoltaic system 10 over a reference period, each operating point being defined by parameters including the photovoltaic cell, the day, the power output of the photovoltaic cell, the temperature of the photovoltaic cell and the irradiance of the photovoltaic cell ;
- determining a plurality of data subsets in the dataset, each data subset including the operating points having a day included in one of a plurality of sub-periods of the reference period and an irradiance included in one of a plurality of irradiance sub-ranges;
- performing regression analysis on each data subset for determining regression parameters for each data subset;
- optionally, validating the dataset as a function of the regression parameters of the data subsets;
- calculating a corrected irradiance as a function of the regression parameters of the data subsets;
- optionally, calculating the performance loss rate of the photovoltaic system as a function of the corrected irradiance.

Separating the data set into data subsets for distinct sub-periods and irradiance ranges allow isolating data subsets in which the variation of power output and temperature of the photovoltaic cells for different subs-periods and irradiances ranges and subsequently performing meaningful regression analysis.

In particular, the separation allows obtaining data subsets in which the main cause of seasonality is likely to be the irradiance and disregarding data subsets in which the apparent seasonality may in fact due to parameters other than irradiance.

Validating the dataset comprises for example determining a comparison parameter as a function of the regression parameters of the data subsets and comparing the comparison parameter to a nominal parameter of the photovoltaic cells.

In the present context, a "nominal parameter" refers to a parameter of the photovoltaic cells provided by the manufacturer of the photovoltaic cells, in particular a parameter of the datasheet of the photovoltaic cells.

The comparison parameter is for example a mean value of a power coefficient determined for the data subsets. The mean value is for example determined as the mean value of a Gaussian fit of a distribution of the comparison parameters of the data subsets.

As the data subsets are separated based on irradiance, such a validation allows validating a dataset in which the main cause of seasonality is likely to be the irradiance and disregarding datasets in which the apparent seasonality may in fact due to parameters other than irradiance.

The corrected irradiance is for example calculated as a function of the initial irradiance (i.e. the irradiance values of the data subsets) based on a regression analysis between initial irradiance and the regression parameters of the data subsets.

The data subsets comprises for example N data subsets. The data subsets are numbered from 1 to N.

In some examples, the regression analysis of each data subset is performed by linear regression according to the following formula:

$$P = a_i T_{cell} + b_i$$

in which P is the power, *Tcell* is the temperature of the photovoltaic cell, $a_i$ is the power variation of the power with the temperature (W/°C) of the ith data subset, $b_i$ is the power at 0°C (W) of the ith data subset.

In the regression analysis, the power P and the temperature Tcell are the variables and the power variation $a_i$ and the power at 0°C $b_i$ are the regression parameters which are determined for and specific to the data subset. Regression parameters $a_i$ and $b_i$ are determined for each data subset.

In some examples, the validation test comprises, for each data subset, determining a power thermal coefficient representing the variation of the power output a photovoltaic cell as a function of the temperature of the photovoltaic cell:

$$\gamma_i = \frac{a_i}{b_i}$$

in which $a_i$ and $b_i$ are the regression parameters (power variation and power at 0°C) determined for the $i^{th}$ data subset and $\gamma_i$ (%/°C) is the power thermal coefficient of the $i^{th}$ data subset.

In some examples, the validation test comprises comparing a mean value of the power thermal coefficients of all the data subsets to a nominal power thermal coefficient of the photovoltaic cells.

Preferably, the mean value of the power thermal coefficient of the data subsets is determined as the mean value of a Gaussian fit of the distribution of the power thermal coefficient of the data subsets.

The distribution of the power thermal coefficient of the data subsets can be represented as a histogram plotting a number of occurrences as a function of the power thermal coefficient. Each vertical bar of the histogram at a given power thermal coefficient value represents the number of data subset which possess a power thermal coefficient having said given power thermal coefficient value.

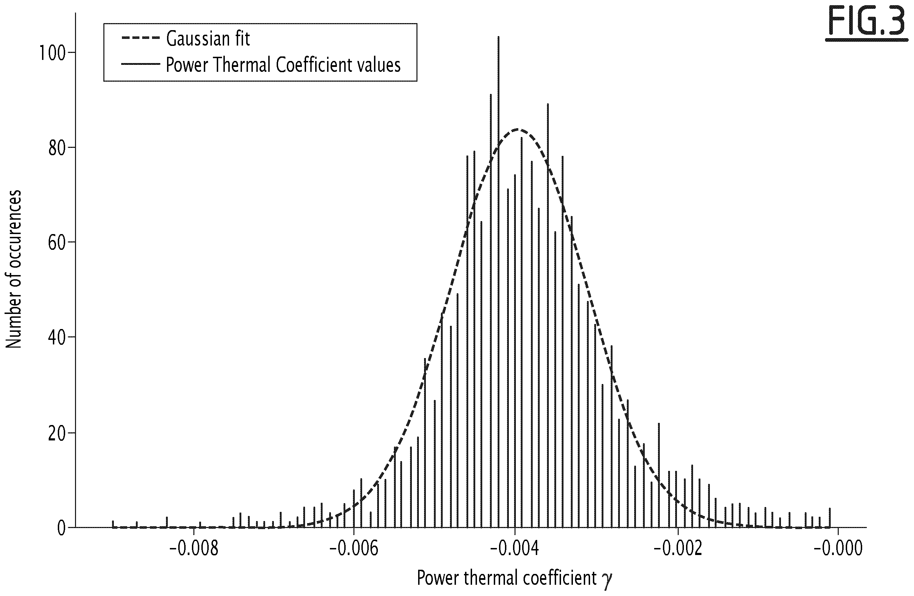

Figure 3 illustrates a distribution of the power thermal coefficient of the data subsets and a Gaussian fit.

In some examples, the dataset is validated if the mean value of the power thermal coefficients of the data subsets and a nominal power thermal coefficient of the photovoltaic cells is below a validation threshold.

The validation threshold is for example $2.10^{-3}$ °C$^{-1}$.

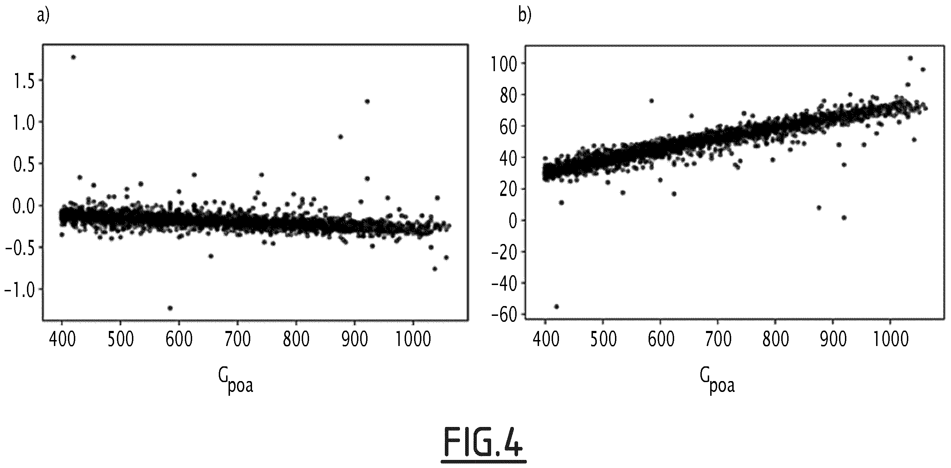

As illustrated on Figure 4, if the dataset is validated, the parameters $a_i$ and $b_i$ of the regression of the data subsets are expected to have a linear relation with the irradiance, so that for every irradiance interval, the power-temperature curve will be parallel.

Figure 4 illustrates plots of the parameters $a_i$ and $b_i$ of data subsets with respect to irradiance $G_{poa}$.

In some examples, the determination of the corrected irradiance comprises determining an overall power variation coefficient by performing a linear regression on the power variations of the data subsets as a function of the irradiance of the data subsets according to the following formula:

$$a = \alpha G_{poa}$$

wherein $a$ is the power variation of the data subsets, $G_{poa}$ is the irradiance of the data subsets and $\alpha$ is an overall power variation coefficient.

The power variation of the data subsets $a$ and irradiance $G_{poa}$ are the regression values of the data subsets. The power variation of the data subsets $a$ take the values $a_1...a_N$. The overall power variation coefficient $\alpha$ is the regression parameter.

In some examples, the determination of the corrected irradiance comprises, for each data subset, performing a linear regression analysis on the power $P$, the temperature of the $Tcell$, the powers at 0°C $b_i$ and the irradiance of the data subsets according to the following formula:

$$P = \alpha G_{poa} T_{cell} + B_i$$

in which P are the power of the operation points of the $i^{th}$ data subset, $Tcell$ are the temperature of the operation points of the $i^{th}$ data subset, $G_{poa}$ is the irradiance of the $i^{th}$ data subset, $\alpha$ is the overall power variation coefficient and $B_i$ is the corrected power at 0°C (W) of the $i^{th}$ data subset.

The power P, the temperature $Tcell$ and the irradiance $G_{poa}$ of each data subset are the regression values for this data subset. The corrected power at 0°C (W $B_i$ is the regression parameter for the $i^{th}$ data subset.

In some examples, the determination of the corrected irradiance comprises fitting the corrected power at 0°C $B_i$ of the data subsets such as to express the corrected power at 0°C of the data subsets as a function of the irradiance according to the following formula:

$$b = \delta G_{poa}$$

wherein $b$ is the corrected powers at 0°C of the data subsets, $G_{poa}$ is the irradiance of the data subsets and $\delta$ is an overall coefficient of power at 0°C. The corrected powers at 0°C $b$ are and the irradiance $G_{poa}$ are the regression values. The corrected powers at 0°C $b$ takes values $B_1...B_N$. The overall coefficient of power at 0°C $\delta$ is the regression parameter.

In some examples, the corrected irradiance is calculated for each operation point of each data subset according the following formula:

$$G_{poa}(new) = G_{poa} + \frac{B_i}{\delta}$$

wherein Gpoa(new) is the corrected irradiance, Gpoa if the initial irradiance of the data subset, $B_i$ is corrected power at 0°C of the data subset and $\delta$ is the overall coefficient of effective power at 0°C.

The performance loss rate of the photovoltaic system 10 is then determined based on the data subset with replacing the irradiance with the corrected irradiance for each operation point.

Optionally, the method comprises storing the corrected irradiance in a memory, displaying the corrected irradiance to a user or an operator and/or sending a message containing the corrected irradiance to another electronic device.

Optionally, the method for calculating the corrected irradiance comprises quantifying the seasonality of the dataset before determining data subsets. If it is determined that the seasonality is below a threshold, is it considered that seasonality of the dataset is not detrimental and the performance loss rate of the photovoltaic system 10 is then determined based on the dataset in a conventional manner, that is with not determination of data subset, validation of dataset and with no calculation of a corrected irradiance as a function of regression parameters of regression analysis performed based on the data subsets.

Quantifying the seasonality of the dataset comprises for example fitting the power output of the operation points of the dataset to a predetermined function having an amplitude and determining said amplitude.

Preferable, if the amplitude exceeds a predetermined threshold, the dataset is labeled as having seasonal characteristics and the steps for calculating a corrected irradiance are performed. Otherwise, the performance loss rate of the photovoltaic system 10 is then determined based on the dataset in a conventional manner.

The predetermined function is for example a sinusoidal function as per the following formula:

$$PR = A sin(\frac{2\Pi}{T}t + \Phi)$$

with A the amplitude, T the period of the sinusoidal function, $\Phi$ the phase of the sinusoidal function and t the time, e.g. expressed as a number of days.

If the period of the sinusoidal function T equal $365 \pm 45$, the performance ratio is labeled as seasonal.

If the amplitude A is equal or higher than an amplitude threshold A1 (for example, A1 = 0.03), then the seasonality is identified as strong and needs to be corrected, so the steps indicated above for correction the irradiance in the dataset are applied. If the amplitude A is lower than to the amplitude threshold A1, then the seasonality is identified as weak and it is considered that it will not impact much the performance loss ratio analysis and that correction of the irradiance is not applied.

In the method for calculating a corrected irradiance, the reference period is chosen to cover a plurality of season such as to be able to take into account the seasonality. The reference period extends for example over several months, for example at least twelve-four months (or one year), in particular at least twenty-four months (two years).

Each sub-period extends for example over at least one week or at least one month. Each sub-period extends for example over one month.

The method for determining corrected irradiance of the photovoltaic system 10 was performed on a photovoltaic solar power plant located in Scottsdale in the United Sates of Amercia. This site has highly seasonal performance ratio trends, even after temperature correction being applied.

The characteristics of the site are as follows:

- the power plant has a power DC capacity of 81.60 kWp;
- the power plant comprises 192 photovoltaic modules of the model Sunpower (SPR-425E-WHT-D) 425 Wp, each photovoltaic module comprising a monofacial photovoltaic panel comprising a plurality of photovoltaic cells;
- the power plant one inverter Satcon Satcon-PVS-75;
- each photovoltaic module is at a fixed tilt angle of 10° with respect to horizon;
- the degradation rate indicated by the module manufacturer of 0.55% per year;
- the power plant is an arid desert environment.

The seasonality check was performed with determining an amplitude A equal to 0.0574. With these values for the amplitude A and period, the site is considered as highly seasonal.

The mean power thermal coefficient of the dataset has been calculated at -0.0039 $°C^{-1}$ using the Gaussian fit. This value is within 0.0002 $°C^{-1}$ of the datasheet value of the photovoltaic modules, so the relationship between the power and temperature during a month is validated. Thus, the main cause of the seasonality is expected to be the irradiance in this case.

Applying the PLR determination method, the following correction parameters were determined:

$$a = -2.55\ 10^{-4}\ G_{poa}$$

$$b = 6.7\ 10^{-2} G_{poa}$$

This PLR determination method leads to an amplitude of 0.00948 compared to the 0.0467 temperature correction's value.

This methodology significantly reduce the seasonality compared to standard temperature correction methods.

**Claims**

1. A method for determining a corrected irradiance of a photovoltaic system over a period, the photovoltaic system comprising photovoltaic cells, the method comprising the steps of :

   - obtaining a dataset of operating points of the photovoltaic cells, each operating point being defined by parameters including the photovoltaic cell, the day, the power output of the photovoltaic cell, the temperature of the photovoltaic cell and the irradiance of the photovoltaic cell, the operating points of the dataset being taken over a period of time ;
   - determining a plurality of data subsets in the dataset, each data subset including the operating points having a day included in one of a plurality of sub-periods of the period and an irradiance included in one of a plurality of irradiance sub-ranges;
   - performing regression analysis on each data subset for determining regression parameters for each data subset;
- optionally, validating the dataset as a function of the regression parameters of the data subsets;
- calculating the corrected irradiance as a function of the regression parameters of the data subsets;
- optionally calculating a performance loss rate of the photovoltaic system as a function of the corrected irradiance.

2. A method for determining a corrected irradiance as in claim 1, wherein validation of the dataset comprises determining a comparison parameter as a function of the regression parameters and comparing the comparison parameter to a nominal parameter of the photovoltaic cells.

3. A method for determining a corrected irradiance as in claim 3, wherein the comparison parameter is mean value determined as the mean value of a Gaussian fit of a distribution of comparison parameters of the data subsets.

4. A method for calculating a corrected irradiance as in any one of the preceding claims, wherein the corrected irradiance is calculated as a function of the initial irradiance based on a regression analysis between initial irradiance and the regression parameters of the data subsets.

5. A method for determining a corrected irradiance as in any one of the preceding claims, wherein the regression analysis comprises, for each data subset, determining a power variation and power at 0°C by performing a linear regression according to the following formula :

$$P = a_i T_{cell} + b_i$$

in which P is the power of the photovoltaic cell, $Tcell$ is the temperature of the photovoltaic cell, $a_i$ is the power variation (W/°C) of the ith data subset, $b_i$ is the power at 0°C (W of the ith data subset.

6. A method for determining a corrected irradiance rate as in claim 5, wherein the validation test comprises, for each data subset, determining a power thermal coefficient representing the variation of the power output a photovoltaic cell as a function of the temperature of the photovoltaic cell:

$$\gamma_i = \frac{a_i}{b_i}$$

in which $a_i$ and $b_i$ are the regression parameters (power variation and power at 0°C) determined for the ith data subset and $\gamma_i$ (%/°C) is the power thermal coefficient of the ith data subset.

7. A method for determining a corrected irradiance rate as in claim 6, wherein the validation test comprises comparing a mean power thermal coefficient of the data subsets to a nominal power thermal coefficient of the photovoltaic cells.

8. A method for determining a corrected irradiance as in claim 7, wherein the mean value of the power thermal coefficient of the data subsets is determined as the mean value of a Gaussian fit of the distribution of the power thermal coefficient of the data subsets.

9. A method for determining a corrected irradiance as in claim 7 or 8, wherein the dataset is validated if the absolute value of a difference between the mean value of the power thermal coefficients of the data subsets and a nominal power thermal coefficient of the photovoltaic cells is below a validation threshold.

10. A method for determining a corrected irradiance as in claim 9, wherein the validation threshold is $2.10^{-3}$ $°C^{-1}$.

11. A method for determining a corrected irradiance as in any one of claim 5 to 10, wherein the determination of the corrected irradiance comprises determining an overall power variation coefficient by performing a linear regression of the power variations of the data subsets as a function of the irradiance according to the following formula:

$$a = \alpha G_{poa}$$

wherein $a$ is the power variation, $G_{poa}$ is the irradiance and $\alpha$ is an overall power variation coefficient.

12. A method for determining a corrected irradiance as in claim 11, wherein the determination of the corrected irradiance comprises, for each data subset, determining a corrected power at 0°C (W by performing a linear regression analysis on the power, the temperature, the irradiance and the powers at 0°C of the data subsets according to the following formula:

$$P = \alpha G_{poa} T_{cell} + B_i$$

in which P is the power of the operation points of the ith data subset, $Tcell$ is the temperature of the operation points of the ith data subset, $G_{poa}$ is the irradiance of the ith data subset, $\alpha$ is the overall power variation coefficient and $B_i$ is the corrected power at 0°C (W) of the ith data subset.

13. A method for determining a corrected irradiance as in claim 12, wherein the determination of the corrected irradiance comprises determining an overall coefficient of power at 0°C by performing a linear regression of the corrected power at 0°C of the data subsets as a function of the irradiance according to the following formula:

$$b = \delta G_{poa}$$

wherein $b$ is the corrected power at 0°C, $G_{poa}$ is the irradiance of the data subsets and $\delta$ is an overall coefficient of power at 0°C.

14. A method for determining a corrected irradiance as in claim 13, wherein the corrected irradiance is calculated for each operation point according the following formula:

$$G_{poa}(new) = G_{poa} + \frac{B_i}{\delta}$$

wherein Gpoa(new) is the corrected irradiance, $G_{poa}$ if the initial irradiance, $B_i$ is corrected power at 0°C of the $i^{th}$ data subset of the operation point and $\delta$ is the overall coefficient of effective power at 0°C.

15. A method for determining a corrected irradiance as in any one of the preceding claims comprising quantifying the seasonality of the dataset.

16. A method for determining a corrected irradiance as in claim 15, wherein quantifying the seasonality of the dataset comprises fitting the power output to a predetermined function having an amplitude and determining said amplitude.

17. A method for determining a corrected irradiance as in claim 16, wherein if the amplitude exceeds a predetermined threshold, the dataset is labeled as having seasonal characteristics and the subsequent steps are performed.

18. A method for determining a corrected irradiance as in claim 16 or 17, wherein the function is:

$$PR = A sin(\frac{2\Pi}{T}t + \Phi)$$

with A the amplitude, T the period of the sinusoid, and t the time, e.g. expressed as a number of days.

19. A method for determining a corrected irradiance as in any one of the preceding claims, wherein the period extends over several months, in particular at least twenty-four months.

20. A method for determining a corrected irradiance as in any one of the preceding claims, wherein each sub-period is a month.

21. Software comprising software instruction configured to be stored in a memory of a computer and to implement the method of determining a corrected irradiance as in any one of the preceding claims when executed by a processor of the computer.

22. Electronic device configured for implementing a method of determining a corrected irradiance as in any one of the claims 1 to 20, the electronic device comprising:

- a reception module configured for obtaining a dataset of operating points of photovoltaic cells, each operating point being defined by parameters including the photovoltaic cell, the day, the power output of the photovoltaic cell, the temperature of the photovoltaic cell and the irradiance of the photovoltaic cell, the operating points of the dataset being taken over a period of time ;
- a configuration module configured for determining a plurality of data subsets in the dataset, each data subset including the operating points having a day included in one of a plurality of sub-periods of the period and an irradiance included in one of a plurality of irradiance sub-ranges;
- a regression module configured for performing a regression analysis on each data subset for determining regression parameters for each data subset;
- optionally, a validation module configured for validating the dataset as a function of the regression parameters of the data subsets;
- a calculation module configured for calculating a corrected irradiance as a function of the regression parameters of the data subsets;
- optionally, a determination module configured for determining the performance loss rate of the photovoltaic system as a function of the corrected irradiance.

## FIG.1

E1

E2

E3

E4

E5

FIG.2

FIG.3

Number of occurences

100 — 80 — 60 — 40 — 20 — 0

- - - - Gaussian fit
——— Power Thermal Coefficient values

Power thermal coefficient $\gamma$

-0.008 -0.006 -0.004 -0.002 -0.000

EP 4 742 527 A1

a)

b)

FIG.4

Europäisches
Patentamt
European
Patent Office
Office européen
des brevets

# EUROPEAN SEARCH REPORT

**Application Number**

EP 24 30 6897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 933 078 A (THREE GORGES INTERNATIONAL ENERGY INVEST GROUP CO LTD) 24 October 2023 (2023-10-24) | 1-4, 15-17, 19-22 | INV. H02S50/00 H02S50/10 |
| A | * claims 1-10; figures 1-5 * | 5-14,18 | |
| X | CN 117 937 478 A (YANGTZE RIVER THREE GORGES GROUP IND DEVELOPMENT BEIJING CO LTD ET AL.) 26 April 2024 (2024-04-26) | 1-4, 15-17, 19-22 | |
| A | * claims 1-8; figures 1-9 * | 5-14,18 | |

TECHNICAL FIELDS
SEARCHED      (IPC)

H02S

The present search report has been drawn up for all claims

| Place of search | Date of completion of the search | Examiner |
|---|---|---|
| The Hague | 1 April 2025 | Boero, Mauro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6897

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | | Publication date |
|---|---|---|---|---|---|
| CN 116933078 | A | 24-10-2023 | CN | 116933078 A | 24-10-2023 |
| | | | WO | 2025016119 A1 | 23-01-2025 |
| CN 117937478 | A | 26-04-2024 | NONE | | |

EPO FORM P0459

For more details about this annex : see Official Journal of the European Patent Office, No. 12/82